# FASCICULE DE BREVET EUROPEEN

(11) **EP 1 435 464 B1**
(45) Date de publication et mention de la délivrance du brevet: **17.05.2006**
(21) Numéro de dépôt: 03293215.4
(22) Date de dépôt: 18.12.2003
(51) Int. Cl.: F16B 13/12

(54) **Cheville à frapper**
Einschlag-Anker
Impact anchor

(30) Priorité: 18.12.2002 FR 0216096
(43) Date de publication de la demande: 07.07.2004
(73) Titulaire: SOCIETE DE PROSPECTION ET D'INVENTIONS TECHNIQUES SPIT, 26501 Bourg-Les-Valence (FR)
(72) Inventeur: Pourtier, Fabrice, 26800 Portes-les-Valence (FR)
(74) Mandataire: Bloch, Gérard

(56) Documents cités:
- EP-A- 0 045 974
- DE-A- 10 045 650
- FR-A- 2 470 279

## Description

La présente invention concerne une cheville dite à frapper.

Une telle cheville présente l'avantage d'une pose simple au travers de la pièce à fixer au matériau support, en perçant au travers de la pièce un trou d'ancrage dans le support, en y introduisant la cheville, toujours au travers de la pièce, jusqu'à ce que la collerette de la cheville vienne en butée contre la pièce, alors plaquée contre le support, en introduisant dans la cheville un clou qu'on vient frapper à l'aide d'un outil pour provoquer l'expansion de la cheville et son ancrage et donc la fixation de la pièce au support. Le clou peut ultérieurement être "dévissé" pour le sortir de la cheville.

On soulignera que l'élément de fixation d'une cheville à frapper est un clou et non une vis, même si le clou est pourvu d'un filetage. En effet, ce filetage n'est pas conformé pour le vissage, mais seulement pour le dévissage.

On peut employer une cheville à frapper dans tous genres de matériau, comme le béton, une pierre parpaing plein, une brique pleine, un parpaing creux, une brique creuse, un hourdis.

Une cheville à frapper comporte un corps creux tubulaire surmonté d'une collerette d'appui, avec une partie crurale d'expansion dont la surface extérieure peut présenter des moyens d'accrochage, qui est fendue dans un plan axial. La cheville comporte ainsi deux fentes longitudinales diamétrales symétriques par rapport à son axe pour son expansion. De ce fait, il peut arriver que, par suite d'une mauvaise frappe ou d'une mauvaise introduction du clou dans la cheville, le clou ne soit dévié et chassé dans l'une des fentes, au préjudice d'une bonne expansion. C'est l'inconvénient des chevilles à frapper.

Par le document FR 2 470 279, on connaît une cheville d'un type un peu semblable, mais qui n'est toutefois pas une cheville à frapper. En deçà de la partie crurale d'expansion à fentes longitudinales diamétrales symétriques, la cheville de cet art antérieur comporte une partie intermédiaire d'expansion, dans la paroi de laquelle sont ménagés des évidements, et qui assure un meilleur guidage d'une vis. Cependant, l'expansion de cette partie intermédiaire peut être contrariée du fait de la pluralité de ces évidements qui, au demeurant, s'étendent symétriquement par rapport au plan axial des fentes de la partie crurale. Ainsi, l'introduction de la vis provoque moins l'expansion de cette partie intermédiaire que son bombage.

L'invention de la présente demande vise à proposer une cheville à frapper assurant, avec un bon et long guidage du clou, une meilleure expansion lors de l'introduction du clou.

A cet effet, l'invention concerne une cheville à frapper comportant un corps creux tubulaire surmonté d'une collerette d'appui avec
- une partie crurale d'expansion à deux fentes s'étendant dans un plan axial,
- une partie intermédiaire d'expansion à paroi évidée, entre la partie crurale et la collerette d'appui,
caractérisée par le fait que la paroi de la partie intermédiaire d'expansion est percée, sensiblement dans le prolongement de chaque fente de la partie crurale, d'une lumière d'expansion continue non rectiligne s'étendant de part et d'autre dudit plan axial et espacée axialement de ladite fente pour assurer axialement une double expansion de la cheville.

Dans la cheville de l'invention, la longueur axiale des lumières d'expansion de la partie intermédiaire peut être plus courte que celle des fentes de la partie crurale.

Avantageusement, les lumières d'expansion de la partie intermédiaire s'étendent en zigzag.

Avantageusement encore, les branches constituant le zigzag de la lumière d'expansion forment entre elles des angles aigus.

De préférence, chaque lumière d'expansion de la partie intermédiaire se prolonge, dans sa portion proche de la collerette d'appui, par une branche de dérivation destinée à réduire le risque de déchirure en début d'expansion.

De préférence encore, chaque lumière d'expansion de la partie intermédiaire ménage au moins un ergot de retenue en saillie hors de la paroi de la cheville.

De préférence toujours, la surface de l'alésage interne de la cheville, près de la collerette d'appui, est conformée pour présenter un bourrelet de retenue d'un clou d'expansion.

Dans une autre forme de réalisation de la cheville de l'invention, il est prévu, en saillie hors de la surface externe de la cheville, deux ergots axialement décalés.

L'invention sera mieux comprise à l'aide de la description suivante de la forme de réalisation préférée de la cheville de l'invention, en référence au dessin annexé, sur lequel :
- la figure 1 représente une vue en perspective d'une première forme de réalisation de la cheville de l'invention et d'un clou ;
- la figure 2 représente une vue de profil de la cheville et du clou de la figure 1 ;
- la figure 3 représente un vue de profil de la cheville et du clou de la figure 2, tournée de 90° par rapport à celle de la figure 2 ;
- la figure 4 représente une vue du clou et une vue en coupe de la cheville suivant l'axe II-II de la figure 2 ;
- la figure 5 représente une vue en perspective d'une autre forme de réalisation de la cheville de l'invention ;
- la figure 6 représente une vue de profil de la cheville de la figure 5 et
- la figure 7 représente un schéma de principe du comportement de la cheville de la figure 5 dans un support creux.

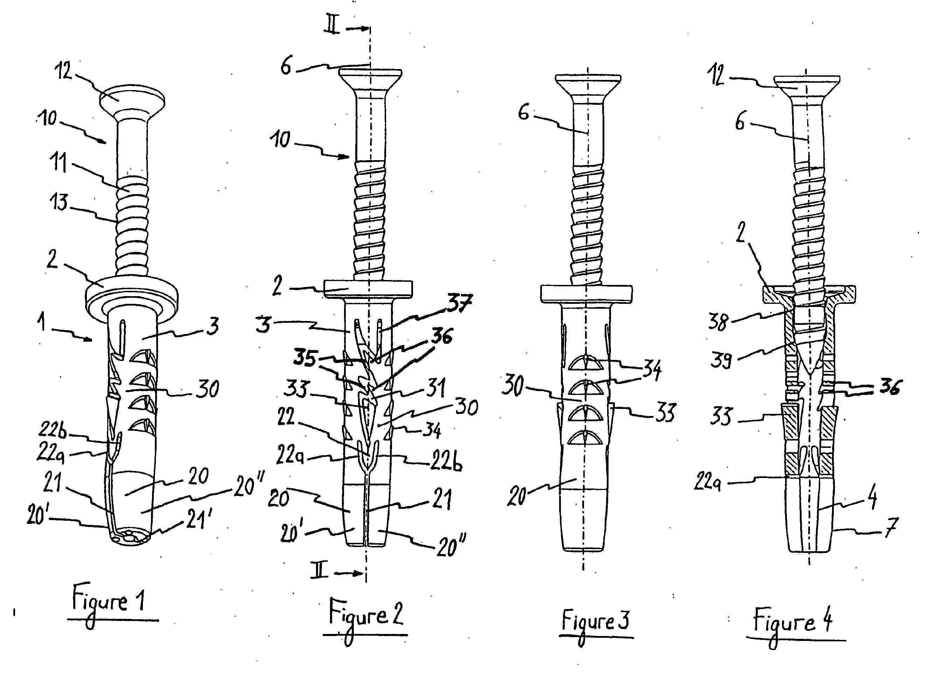

En référence aux figures 1 et 2, la cheville 1 de l'invention comprend un corps tubulaire 3, s'étendant suivant un axe 6, surmonté d'une collerette d'appui 2. Un clou 10 est introduit dans la cheville 1. Cette cheville 1 est utilisée pour des clous 10 comprenant une tête 12 et un fût 11, le fût 11 comprenant un filetage 13, qui est conformé pour permettre l'enfoncement du clou 10 en le frappant, tout en permettant dès lors un dévissage du clou 10.

Le corps tubulaire 3 de la cheville 1 comporte une partie crurale d'expansion 20 et une partie intermédiaire 30 entre la partie crurale d'expansion 20 et la collerette d'appui 2. La partie crurale d'expansion 20 est fendue suivant un plan contenant l'axe 6 ; elle comporte donc deux fentes (21, 21') qui la divisent en deux demi-corps (20', 20").

Dans la suite de la description, nous parlerons systématiquement de "chaque fente (21, 21')", mais ne détaillerons les autres éléments que par rapport à la fente 21, étant entendu que la cheville 1 est parfaitement symétrique par rapport à l'axe 6 et que donc chaque élément décrit dans la partie de la cheville 1 contenant la fente 21 aura son pendant symétrique dans la partie de cheville 1 contenant la fente 21'.

Dans la partie supérieure de la partie crurale d'expansion 20, chaque fente (21, 21') se divise en deux fentes (22a, 22b) qui s'étendent symétriquement par rapport à l'axe de la fente (21, 21') qui leur donne naissance, sur la surface de révolution de la cheville 1. Chaque fente (21, 21') prolongée continûment de ses deux fentes (22a, 22b) a donc une forme de Y symétrique. En référence à la figure 4, l'alésage intérieur 4 de la partie crurale d'expansion 20 est de forme légèrement tronconique, s'affinant vers l'extrémité, et de diamètre inférieur à celui du fût du clou 10. La surface extérieure 7 est également de forme tronconique, légèrement bombée.

En référence à la figure 2, la partie intermédiaire d'expansion 30 de la cheville 1 comporte une paroi évidée dans laquelle est percée, sensiblement dans le prolongement de chaque fente (21, 21') de la partie crurale 20, une lumière d'expansion 31. En référence à la figure 3, la surface extérieure de cette partie intermédiaire 30 comprend des ergots d'accrochage 34, ici au nombre de huit, se répartissant quatre par quatre symétriquement par rapport au plan axial contenant les deux fentes (21, 21') de la partie crurale d'expansion 20 ; chacune des séries de quatre ergots 34 se présente en ligne, les ergots 34 étant décalés entre eux longitudinalement.

La partie intermédiaire 30 se présente globalement en un corps tubulaire de forme sensiblement cylindrique d'axe 6. Chaque lumière d'expansion 31 de la partie intermédiaire 30 s'étend globalement dans une direction longitudinale, sensiblement dans le prolongement de chaque fente (21, 21') et donc dans une direction sensiblement parallèle à l'axe 6. Chaque lumière d'expansion 31 s'étend en forme de zigzag de part et d'autre du plan axial comportant les deux fentes (21, 21') de la partie crurale d'expansion 20. Les branches successives 35 constituant le zigzag de chaque lumière d'expansion 31 forment entre elles des angles aigus ; de cette façon, elles ménagent sur le chemin du clou 10 le long de cette paroi des obstacles 36 ne permettant pas au clou 10 de s'engager dans ces lumières 31. Les deux dernières branches 35 de chaque lumière 31 avant la partie crurale d'expansion 20 ménagent aussi radialement un ergot d'accrochage 33 formant obstacle pour le support recevant la cheville 1. Chaque ergot d'accrochage 33 fait saillie sensiblement perpendiculairement hors de la surface extérieure de la cheville 1, à l'intersection entre les deux dernières branches 35 de chaque lumière d'expansion 31, et son épaisseur radiale va en s'amenuisant le long de chacune des branches 35, la surface reliant ces deux branches 35 étant sensiblement plane, ce qui confère à l'ergot d'accrochage 33 une forme global de trièdre.

La lumière d'expansion 31 de la cheville 1 de l'invention comprend, dans sa portion proche de la collerette d'appui 2, une branche de dérivation 37, se terminant au même niveau longitudinal que la branche précédente 35, afin de réduire le risque de déchirement de la paroi de la cheville 1 en début d'expansion, c'est-à-dire lors de l'expansion de la portion de la cheville 1 proche de la collerette d'appui 2.

Chaque fente (21, 21') de la partie crurale d'expansion 20 est espacée de la lumière d'expansion 31 associée ce qui ménage, entre les deux fentes (22a, 22b) prolongeant la fente (21, 21') et la lumière d'expansion 31, une zone d'expansion 22 dans le plan des fentes (21, 21').

L'extrémité du fût 11 du clou 10 opposée à la tête 12 est initialement placée dans la partie supérieure de la cheville 1, c'est-à-dire à travers la collerette d'appui 2 et le début de la partie intermédiaire 30, soit par l'utilisateur, soit directement par le fabricant de la cheville 1. Sur la surface 4 de l'alésage interne de la cheville 1, dans la portion proche de la collerette d'appui 2, il est prévu un bourrelet 38 de retenue du clou 10 et un rétrécissement 39, aussi de retenue du clou 10, tels que le bourrelet de retenue 38 soit situé entre la collerette d'appui 2 et le rétrécissement 39. Le clou 10 est donc bloqué en translation suivant l'axe 6 par le bourrelet de retenue 38 et le rétrécissement 39 ; ainsi, l'utilisateur n'a pas besoin de tenir le clou 10 et la cheville 1 solidaires lorsqu'il les prend. En outre, il peut enfoncer la cheville 1 dans le support jusqu'à ce que la collerette d'appui 2 vienne en butée sur la pièce à fixer sur le support, le rétrécissement 39 évitant que le clou 10 ne s'enfonce dans la cheville 1 et ne provoque son expansion avant ladite mise en butée. Il est alors possible d'enfoncer le clou 10 en le frappant à l'aide d'un outil approprié, comme un marteau. Dans la partie intermédiaire 30, le diamètre de l'alésage intérieur 4 de la cheville 1 est plus petit que le diamètre du fût 11 du clou 10.

Va maintenant être décrit le comportement de la cheville 1 lors de l'enfoncement d'un clou 10. Une fois la collerette d'appui 2 en butée sur la pièce à fixer sur le support, l'utilisation d'un outil pour frapper le clou 10 permet au clou 10 de passer au-delà du rétrécissement 39 et de s'enfoncer dans la cheville 1. Lorsque le clou 10 s'enfonce, il ne peut le faire que sensiblement suivant l'axe 6 de la cheville 1. En effet, dans la partie intermédiaire 30, s'il dévie de sa trajectoire, les obstacles 36 l'empêchent de s'engager dans la lumière d'expansion 31. En raison de la présence des lumières d'expansion 31, le clou 10 provoque l'expansion de la cheville 1, le diamètre du fût 11 du clou 10 étant plus grand que l'alésage intérieur 4 de la cheville 1. Ainsi, dès le passage du clou 10 dans la partie intermédiaire 30, la cheville 1 commence son expansion et donc son ancrage dans la paroi du support, notamment grâce à ses ergots d'accrochage 34. Grâce à la branche de dérivation 37, l'expansion de la partie intermédiaire 30 ne provoque pas de déchirure de la cheville 1, au niveau de la portion de la lumière d'expansion 31 proche de la collerette d'appui 2.

Le passage du clou 10 de la partie intermédiaire 30 à la partie crurale d'expansion 20 provoque l'expansion, dans le plan des fentes (21, 21'), des zones d'expansion 22 correspondantes. Ces zones d'expansion 22 font alors saillie et forment de nouveaux ergots d'accrochage.

La poursuite de l'enfoncement du clou 10 provoque l'expansion de la partie crurale d'expansion 20 en raison des fentes (21, 21'). L'ancrage de la cheville 1 est alors complet, cette dernière ayant effectué une expansion à la fois dans la partie intermédiaire 30, dans la zone d'expansion 22 et dans la partie crurale d'expansion 20.

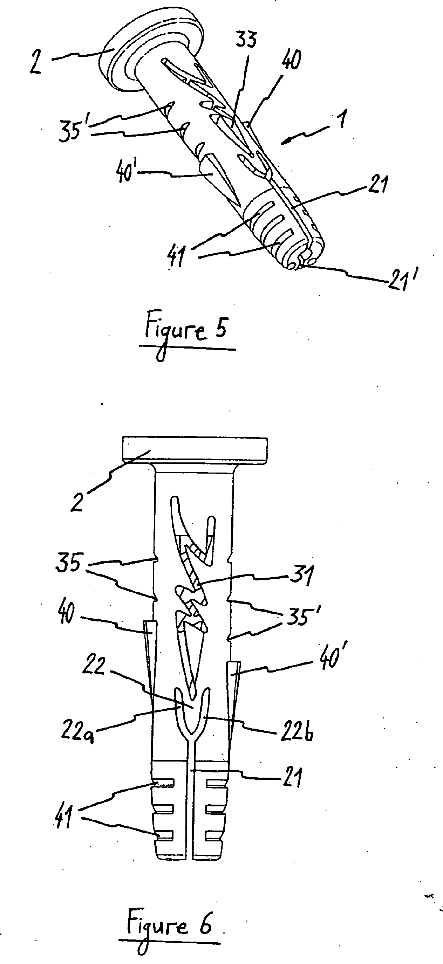

En référence à la figure 5, et selon une autre forme de réalisation de la cheville de l'invention, il peut également être prévu un jeu différent d'ergots d'accrochage, ici spécialement prévus pour la fixation d'une pièce à un matériau support creux. Sont conservées sur les figures 5 et 6 les références des éléments qui n'ont pas changé, ainsi que celui de la cheville 1. Dans cette forme de réalisation, il est prévu, en saillie hors de la surface externe de la cheville 1, deux ergots (40, 40') de taille assez importante, un de chaque côté du plan contenant les deux fentes (21, 21') de la partie crurale d'expansion 20. Ces ergots (40, 40') sont axialement décalés. Ils se situent, pour l'un (40) dans la partie inférieure de la partie intermédiaire 30, au niveau de l'ergot d'accrochage 33 formé par les deux dernières branches 35 de la lumière d'expansion 31, pour l'autre (40'), au niveau de la zone d'expansion 22, ménagée par les branches (22a, 22b) prolongeant chaque fente (21, 21'). Les huit ergots d'accrochage 34 ont été remplacés par des rainures (35, 35') dans la partie intermédiaire 30. Ces rainures sont au nombre de deux du côté de la cheville 1 où l'ergot 40 est le plus proche de la collerette d'appui 2, au nombre de trois de l'autre côté. Enfin, la partie crurale d'expansion 20 est également pourvue de rainures 41. Ces rainures 41 aident à l'accrochage de la cheville 1 dans la paroi du support auquel on veut fixer la pièce.

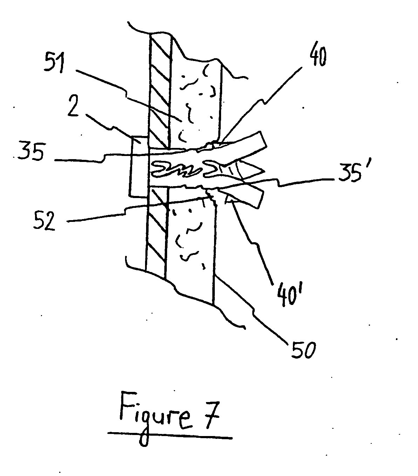

En référence à la figure 7, lors de l'expansion de la cheville 1 dans un support creux, la présence des ergots (40, 40') permet à la cheville 1 de s'ancrer dans le support, en venant s'arc-bouter contre la face arrière 50 du matériau support creux 51, quelle que soit son épaisseur ou l'importance du cratère 52 formé au perçage. Les rainures (35, 35') aident aussi à l'ancrage. Cette cheville 1 est aussi utilisable dans un support plein. Les rainures 41 participent alors à l'ancrage.

## Revendications

1. Cheville à frapper comportant un corps creux tubulaire (3) surmonté d'une collerette d'appui (2) avec
- une partie crurale d'expansion (20) à deux fentes (21, 21') s'étendant dans un plan axial,
- une partie intermédiaire d'expansion (30) à paroi évidée, entre la partie crurale (20) et la collerette d'appui (2),
**caractérisée par le fait que** la paroi de la partie intermédiaire d'expansion (20) est percée, sensiblement dans le prolongement de chaque fente (21, 21') de la partie crurale (20), d'une lumière d'expansion (31) continue non rectiligne s'étendant de part et d'autre dudit plan axial et espacée (22) axialement de ladite fente (21, 21') pour assurer axialement une double expansion de la cheville.

2. Cheville selon la revendication 1, dans laquelle la longueur axiale des lumières d'expansion (31) de la partie intermédiaire (30) est plus courte que celle des fentes (21, 21') de la partie crurale (20).

3. Cheville selon l'une des revendications 1 et 2, dans laquelle les lumières d'expansion (31) de la partie intermédiaire (30) s'étendent en zigzag.

4. Cheville selon la revendication 3, dans laquelle les branches (35) constituant le zigzag de la lumière d'expansion (31) forment entre elles des angles aigus.

5. Cheville selon l'une des revendications 1 à 4, dans laquelle chaque lumière d'expansion (31) de la partie intermédiaire (30) se prolonge, dans sa portion proche de la collerette d'appui (2), par une branche de dérivation (37) destinée à réduire le risque de déchirure en début d'expansion.

6. Cheville selon l'une des revendications 1 à 5, dans laquelle chaque lumière d'expansion (31) de la partie intermédiaire (30) ménage au moins un ergot de retenue (33) en saillie hors de la paroi de la cheville.

7. Cheville selon l'une des revendications 1 à 6, dans laquelle la surface de l'alésage interne (4) de la cheville, près de la collerette d'appui (2), est conformée pour présenter au moins un bourrelet (38, 39) de retenue d'un clou d'expansion (10).

8. Cheville selon l'une des revendications 1 à 7, dans laquelle il est prévu, en saillie hors de la surface externe de la cheville, deux ergots (40, 40') axialement décalés.

## Claims

1. Striking plug comprising a tubular hollow body (3) surmounted by a bearing collar (2) with
- a crural expansion part (20) with two slots (21, 21') lying in an axial plane,
- an intermediate expansion part (30) with a cut-away wall between the crural part (20) and the bearing collar (2),
**characterized in that** the wall of the intermediate expansion part (20) is pierced, substantially in the extension of each slot (21, 21') of the crural part (20), with a non-straight continuous expansion aperture (31) lying on either side of the said axial plane and axially spaced (22) from the said slot (21, 21') in order to provide double axial expansion of the plug.

2. Plug according to Claim 1, in which the axial length of the expansion apertures (31) of the intermediate part (30) is shorter than that of the slots (21, 21') of the crural part (20).

3. Plug according to either of Claims 1 and 2, in which the expansion apertures (31) of the intermediate part (30) lie in a zigzag.

4. Plug according to Claim 3, in which the branches (35) forming the zigzag of the expansion aperture (31) form acute angles between them.

5. Plug according to one of Claims 1 to 4, in which each expansion aperture (31) of the intermediate part (30) is extended in its portion close to the bearing collar (2), by a side branch (37) intended to reduce the risk of tearing at the start of expansion.

6. Plug according to one of Claims 1 to 5, in which each expansion aperture (31) of the intermediate part (30) forms at least one retaining lug (33) projecting out of the wall of the plug.

7. Plug according to one of Claims 1 to 6, in which the surface of the inner bore (4) of the plug, close to the bearing collar (2), is shaped in order to present at least one bead (38, 39) for retaining an expansion nail (10).

8. Plug according to one of Claims 1 to 7, in which two axially offset lugs (40, 40') are provided projecting out of the outer surface of the plug.

## Patentansprüche

1. Einschlagdübel, umfassend einen röhrenförmigen Hohlkörper (3), auf den ein Stützkragen (2) aufgesetzt ist, umfassend
- einen Schenkelerweiterungsteil (20) mit zwei Schlitzen (21, 21'), der sich in einer Axialebene erstreckt,
- einen Zwischenerweiterungsteil (30) mit einer ausgenommenen Wand zwischen dem Schenkelteil (20) und dem Stützkragen (2),
**dadurch gekennzeichnet, dass** die Wand des Zwischenerweiterungsteils (20) im Wesentlichen in der Verlängerung jedes Schlitzes (21, 21') des Schenkelteils (20) mit einer durchgehenden nicht geradlinigen Erweiterungsöffnung (31) durchbohrt ist, die sich beiderseits der Axialebene erstreckt und axial von dem Schlitz (21, 21') entfernt (22) ist, um axial eine doppelte Erweiterung des Dübels zu gewährleisten.

2. Dübel nach Anspruch 1, bei dem die Axiallänge der Erweiterungsöffnungen (31) des Zwischenteils (30) kürzer als jene der Schlitze (21, 21') des Schenkelteils (20) ist.

3. Dübel nach einem der Ansprüche 1 und 2, bei dem sich die Erweiterungsöffnungen (31) des Zwischenteils (30) zickzackförmig erstrecken.

4. Dübel nach Anspruch 3, bei dem die Abschnitte (35), die die Zickzackform der Erweiterungsöffnung (31) bilden, zwischen sich spitze Winkel bilden.

5. Dübel nach einem der Ansprüche 1 bis 4, bei dem jede Erweiterungsöffnung (31) des Zwischenteils (30) in ihrem Abschnitt nahe dem Stützkragen (2) durch einen Ablenkabschnitt (37) verlängert ist, der dazu bestimmt ist, die Gefahr des Zerreißens bei Beginn der Erweiterung zu verringern.

6. Dübel nach einem der Ansprüche 1 bis 5, bei dem jede Erweiterungsöffnung (31) des Zwischenteils (30) mindestens einen aus der Wand des Dübels vorspringenden Haltehaken (33) ausspart.

7. Dübel nach einem der Ansprüche 1 bis 6, bei dem die Oberfläche der Innenbohrung (4) des Dübels in der Nähe des Stützkragens (2) derart ausgeführt ist, dass sie mindestens einen Wulst (38, 39) zum Halten eines Erweiterungsnagels (10) aufweist.

8. Dübel nach einem der Ansprüche 1 bis 7, bei dem aus der Außenseite des Dübels vorspringend zwei axial versetzte Haken (40, 40') vorgesehen sind.
